# EUROPÄISCHE PATENTANMELDUNG

(11) **EP 1 107 495 A2**
(43) Veröffentlichungstag der Anmeldung: **13.06.2001**
(21) Anmeldenummer: 00440302.8
(22) Anmeldetag: 22.11.2000
(51) Int. Cl.: H04J 14/02, H04L 7/00

(54) **Synchrones digitales Nachrichtenübertragungssystem**

(30) Priorität: 11.12.1999 DE 19959803
(71) Anmelder: ALCATEL, 75008 Paris (FR)
(72) Erfinder: Wolf, Michael Joachim, Dr., 74395 Mundelsheim (DE)
(74) Vertreter: Menzietti, Domenico, Dipl.-Ing

(57) **Zusammenfassung**

Das erfindungsgemäße synchrones digitale Nachrichtenübertragungssystem dient zur optischen Übertragung von elektrischen Signalen. Die zu übertragenden elektrischen Signale werden elektrisch/optisch (E/O1, E/O2, E/On) umgesetzt und im Wellenlängenmultiplex übertragen werden. Dazu wird WDM oder DWDM verwendet; WDM=Wavelength Division Multiplex, DWDM=Dense WDM. Mindestens ein nicht umschaltbarer Hilfskanal ist unter Verwendung mindestens einer Wellenlänge (λ₁) eingerichtet. Über den Hilfskanal werden insbesondere Synchronisationssignale, aber auch Maintenance- und Management-Signale übertragen. Dies hat den Vorteil, dass unabhängig von den geschalteten Nachrichtenverbindungen stets eine Synchronisation im gesamten System gewährleistet ist. Jedes Netzelement (NE1, NE2, NE3) hat zumindest eine Schnittstelleneinrichtung, die für die Synchronisation reserviert ist und die stets Signale über die für die Synchronisation reservierte Wellenlänge (λ₁) empfängt.

## Beschreibung

Die Erfindung bezieht sich auf ein synchrones digitales Nachrichtenübertragungssystem gemäß dem Oberbegriff des Patentanspruchs 1 sowie auf ein Verfahren zum optischen Übertragen von elektrischen Signalen gemäß dem Oberbegriff des Patentanspruchs 7.

Ein synchrones digitales Nachrichtenübertragungssystem arbeitet z.B. gemäß einem Standard für synchrone digitale Hierarchie (SDH/SONET-Standard). In einem solchen digitalen Übertragungssystem sind einzelne Netzelemente durch unterschiedliche Übertragungsmedien (z.B. Kupferkabel, Lichtwellenleiter oder Funkstrecken) miteinander verbunden. Ein Netzelement ist z.B. eine Vermittlungsstelle für ein öffentliches Fernsprechnetz, ein Cross-Connect oder ein Add/Drop-Multiplexer. Zur Synchronisation der Netzelemente sind zwei Verfahren bekannt: Master/Slave-Synchronisation und gegenseitige Synchronisation.

Beim Master/Slave-Verfahren, auch hierarchische Synchronisation genannt, wird ein einziger, in einer Primär-Referenzquelle erzeugter Primär-Referenztakt zur Synchronisation der ersten Hierarchieebene von Netzelementen, auch Knoten genannt, verwendet. Diese Knoten übergeben ihre abgeleiteten Takte an die Knoten der nächsten Ebene und so weiter.

Beim Verfahren der gegenseitigen Synchronisation sind alle Knoten gleichwertig über die bestehenden digitalen Verbindungen miteinander verbunden. In jedem Knoten wird aus den eintreffenden Taktsignalen und dem eigenen internen Takt der mittlere Phasenwert berechnet.

Aus DE444651 1 ist bekannt, zur Vermeidung von Synchronisationsschleifen eine Synchronisationshierarchie festzulegen durch Einteilung der für die Synchronisierung verwendeten Schnittstelleneinrichtungen jedes Netzelements in zwei Klassen. In Schnittstelleneinrichtungen der einen Klasse werden empfangene Synchronisationssignale ignoriert, von den Schnittstelleneinrichtungen der anderen Klasse werden Synchronisationssignale (Taktreferenzen) ausgesandt.

Netzelemente haben mehrere Schnittstelleneinrichtungen, die in der Regel alle zum Empfang und Aussendung von Nachrichtensignalen, d.h. Sprache, Daten, etc. dienen. Einige, vordefinierte Schnittstelleneinrichtungen dienen zusätzlich dem Empfang und/oder der Aussendung von Synchronisationssignalen. Rein elektrische synchrone digitale Nachrichtenübertragungssysteme haben fest verschaltete physikalische Verbindungen. Eine Synchronisationshierarchie wird durch vorab festgelegte Pfade festgelegt. Bei der abschnittsweisen Verwendung von Funk oder optischer Übertragung im Punkt-zu-Punkt Verfahren werden die elektrischen Signale (Nachrichten + Synchronisation) transparent durchgeschalten, d.h. für jeden optischen Kanal ist beispielsweise eine Wellenlänge reserviert. Der optische Kanal wird über eine nicht umschaltbare optische Verbindung realisiert. Die für die Synchronisation bestimmten Schnittstelleneinrichtungen der Netzelemente erhalten so stets die nötigen Synchronisationssignale. Selbst wenn zwischenzeitlich keine Nachrichten übertragen werden, werden die Verbindungen zwischen den Netzelementen aufrechterhalten, z.B. durch Aussendung von Default-Nachrichten, so dass eine kontinuierliche Synchronisation gewährleistet ist.

Eine neue Situation tritt ein, wenn bei der abschnittsweisen optischen Übertragung keine zeitlich unveränderbare Durchschaltung erfolgt.

Optische Verbindungen sind nun nicht mehr fest Wellenlängen zugeordnet. Eine flexible und zeitlich varierbare Zuweisung von optischen Kanälen zu Wellenlängen ist möglich. Ein optischer Kanal zur Übertragung eines ersten Nachrichtenpakets wird z.B. über eine erste umschaltbare optische Verbindung unter Verwendung einer ersten Wellenlänge realisiert. Ein optischer Kanal zur Übertragung eines zweiten Nachrichtenpakets wird z.B. über eine zweite umschaltbare optische Verbindung unter Verwendung einer zweiten Wellenlänge realisiert. Werden in Verbindung mit Wellenlängenmultiplex Netzelemente mit Vermittlungseigenschaften eingesetzt, z.B. optische Cross-Connects, so können optische Kanäle beliebig und zeitlich variabel zur Übertragung von Nachrichtensignalen, z.B. SDH- oder SONET-Signalen eingerichtet werden. Eine erste optische Verbindung zur Einrichtung eines ersten optischen Kanals wird beispielsweise in einer ersten Zeitspanne zur Übertragung von Nachrichten von einem ersten Netzelement zu einem zweiten Netzelement genutzt, wobei zwischen die Netzelemente ein optischer Cross-Connect geschaltet ist. Die erste optische Verbindung wird z.B. unter Verwendung einer ersten Wellenlänge realisiert. Über die der ersten Wellenlänge zugeordnete Schnittstelleneinrichtung synchronisiert sich das zweite Netzelement. D.h. der Synchronisationstakt, der einem Bittakt entspricht, wird für alle Schnittstelleneinrichtungen des zweiten Netzelementes verwendet. Wenn nun in einer zweiten Zeitspanne die erste Wellenlänge durch den optischen Cross-Connect für eine zweite optische Verbindung zur Einrichtung eines zweiten optischen Kanals zur Übertragung von Nachrichten von dem ersten Netzelement zu einem dritten Netzelement verwendet wird, ist die Verbindung über die erste Wellenlänge zum zweiten Netzelement unterbrochen. Das zweite Netzelement kann sich in der zweiten Zeitspanne nicht mehr synchronisieren. Selbst wenn das zweite Netzelement über eine zweite oder dritte optische Verbindung Nachrichten- und/oder Synchronisationsignale empfangen würde, kann es sich dennoch nicht synchronisieren, da nur die der ersten Wellenlänge zugeordnete Schnittstelleneinrichtung zum Zwecke der Vornahme der Synchronisation für alle Schnittstelleneinrichtungen reserviert ist. Anstelle durch eine Schnittstelleneinrichtung kann die Synchronisation auch unter Verwendung von zwei oder drei Schnittstelleneinrichtungen, z.B. mittels einer zusätzlichen Auswahleinrichtung, die den qualitativ besten Takt auswählt, durchgeführt werden. Durch die Verwendung von drei Schnittstelleneinrichtungen für Zwecke der Synchronisation in Verbindung mit drei Wellenlängen kann zwar die Wahrscheinlichkeit, dass keine Synchronisation möglich ist minimiert, jedoch nicht ausgeschlossen werden.

Die Erfindung schlägt ein synchrones digitales Nachrichtenübertragungssystem gemäß Patentanspruch 1 und ein Verfahren zum optischen Übertragen von elektrischen Signalen gemäß Patentanspruch 6 vor.

Das erfindungsgemäße synchrones digitale Nachrichtenübertragungssystem dient zur optischen Übertragung von elektrischen Signalen. Die zu übertragenden elektrischen Signale werden elektrisch/optisch umgesetzt und im Wellenlängenmultiplex übertragen werden. Dazu wird WDM oder DWDM verwendet; WDM=Wavelength Division Multiplex, DWDM=Dense WDM. Mindestens ein nicht umschaltbarer Hilfskanal ist insbesondere zur Übertragung von Synchronisationssignalen reserviert. Dies hat den Vorteil, dass unabhängig von den geschalteten Nachrichtenverbindungen stets eine Synchronisation im gesamten System gewährleistet ist. Jedes Netzelement hat zumindest eine Schnittstelleneinrichtung, die für die Synchronisation reserviert ist und die stets Signale über die für die Synchronisation reservierte Wellenlänge empfängt. Der Hilfskanal kann insbesondere zusätzlich zur Übertragung von Maintenance- und Management-Signalen verwendet werden. Dadurch kann die Kapazität des Hilfskanals optimal ausgenutzt werden.

Das synchrone digitale Nachrichtenübertragungssystem beinhaltet z.B. mindestens drei jeweils mindestens einen Elektrisch/Optisch-Umsetzer und mindestens einen Optisch/Elektrisch-Umsetzer beinhaltende Netzelemente, die über optische Leitungen miteinander verbunden sind. Des weiteren ist mindestens ein optischer Cross-Connect vorgesehen, der zwischen die Netzelemente geschaltet ist. Jeder optische Cross-Connect ist geeignet, unter Verwendung einzelner Wellenlängen optische Verbindungen zu schalten zur Weiterleitung von Signalen eines Netzelements zu einem anderen Netzelement, wobei der mindestens eine Hilfskanal nicht für die geschalteten optischen Verbindungen verwendbar ist. Der Cross-Connect führt Schaltoperationen für optische Nachrichtenverbindungen zur Einrichtung optischer Kanäle aus. Er ist aber auf die vorhandenen Wellenlängen minus der für den mindestens einen optischen Hilfskanal, also insbesondere für die Synchronisation reservierten Wellenlängen beschränkt.

In einer bevorzugten Ausführungsform beinhaltet das synchrone digitale Übertragungssystem mindestens drei über optische Leitungen verbundene Netzelemente, die als SDH- oder SONET-Elemente ausgeführt sind. Zwischen den Netzelementen ist eine hierarchische Synchronisation durch die Einrichtung des mindestens einen Hilfskanals zur Übertragung eines in einer Primär-Referenzquelle generierten Synchronisationstaktes und daraus abgeleitete Takte über vorgegebene Pfade eingerichtet. Beispielsweise wird ein in einem ersten Netzelement generierter Referenztakt zum Zwecke der Synchronisation über eine erste, reservierte und nicht umschaltbare optische Verbindung unter Verwendung einer ersten Wellenlänge zu einem zweiten Netzelement übertragen. Ein im zweiten Netzelement aus dem empfangenen Referenztakt abgeleiteter Takt wird über eine zweite, reservierte und nicht umschaltbare optische Verbindung unter Verwendung einer zweiten Wellenlänge zu einem dritten Netzelement übertragen. Zwischen dem ersten und dem zweiten Netzelement ist dann die erste Wellenlänge ausschließlich für die Übertragung von Hilfssignalen, wie Synchronisationssignalen, Maintenance- und Management-Signalen reserviert und kann nicht gleichzeitig für die Übertragung von Nachrichten, z.B. Daten, verwendet werden. Außer der ersten Wellenlänge können aber alle anderen verfügbaren Wellenlängen, z.B. zwanzig Stück, für die Übertragung der Nachrichtensignale genutzt werden. Zwischen dem zweiten und dem dritten Netzelement ist dann die zweite Wellenlänge für die Übertragung von Hilfssignalen, wie z.B. Synchronisationssignalen reserviert und kann nicht gleichzeitig für die Übertragung von Nachrichten verwendet werden. Außer der zweiten Wellenlänge können aber alle anderen verfügbaren Wellenlängen, z.B. die erste und die dritte bis zwanzigste für die Übertragung der Nachrichtensignale genutzt werden. Die Synchronisation im gesamten System ist garantiert.

Alternativ zur hierarchischen Synchronisation kann die Erfindung auch bei der gegenseitigen Synchronisation angewendet werden. Das synchrone digitale Übertragungssystem beinhaltet mindestens drei über optische Leitungen verbundene Netzelemente, die als SDH- oder SONET-Elemente ausgeführt sind. Zwischen den Netzelementen wird das Verfahren der gegenseitigen Synchronisation durch die Einrichtung des mindestens einen optischen Hilfskanals zur Übertragung mindestens eines in mindestens einer Primär-Referenzquelle generierten Synchronisationstaktes über vorgegebene Pfade eingerichtet. Die Pfade im System werden vorab bestimmt. In den einzelnen Pfaden ist jeweils mindestens eine ausgewählte Wellenlänge ausschließlich für die Übertragung von Hilfssignalen, z.B. Synchronisationssignalen, Maintenance- und Management-Signalen vorgesehen. Auf jeder für die Synchronisationsverteilung genutzte Strecke zwischen zwei Netzelementen gibt es somit mindestens einen nicht umschaltbaren optischen Hilfskanal, der insbesondere für Synchronisationszwecke dient, und insbesondere nicht zur Nachrichtenübertragung.

In einer weiteren bevorzugten Ausführungsform der Erfindung sind in dem synchronen digitalen Übertragungssystem mindestens drei über optische Leitungen verbundene Netzelemente vorgesehen sowie ein Synchronisations-Manager und ein Connection-Manager. Der Synchronisations-Manager ist geeignet, über den mindestens einen Hilfskanal dedizierte Synchronisationsverbindungen zwischen den mindestens drei Netzelementen zu konfigurieren. Der Connection-Manager ist geeignet, über umschaltbare optische Verbindungen, die den mindestens einen Hilfskanal nicht enthalten sind, Nachrichtenverbindungen zu konfigurieren. Synchronisations-Manager und Connection-Manager dienen als Netzwerk-Management. Bei der Systemplanung werden die Anzahl der Netzelemente, die Anzahl der möglichen optischen Verbindungen, etc. ermittelt. Für die Synchronisation wird im Synchronisations-Manager eine Topologie entworfen. Beispielsweise wird eine Master/Slave-Synchronisation gewählt. Für die Implementierung dieser Synchronisation werden die nötigen Pfade ermittelt. Die Pfade werden als nicht umschaltbare optische Hilfskanäle eingerichtet. Jedem Hilfskanal ist z.B. eine bestimmte Wellenlänge zugeordnet. In jedem Netzelement wird mindestens ein Schnittstellenelement für die Synchronisation ausgewählt. Den ausgewählten Schnittstellenelementen wird jeweils die Wellenlänge des Hilfskanals zugeordnet. Über diese Wellenlänge dürfen nur Hilfssignale, wie Synchronisationssignale, Maintenance- und Management-Signale übertragen werden. Nach Abschluss der Konfigurierung der Synchronisationsverbindungen erfolgt das Konfigurieren der Nachrichtenverbindungen. Nachrichten, wie Datenpakete, werden über geschaltete Nachrichtenverbindungen übertragen, die sich zu keinem Zeitpunkt mit den Synchronisationsverbindungen, d.h. dem mindestens einen optischen Hilfskanal überschneiden dürfen. Die für die Synchronisationsverbindungen reservierten Wellenlängen sind daher für den Connection-Manager nicht benutzbar.

Beim erfindungsgemäßen Verfahren zum optischen Übertragen von elektrischen Signalen werden die zu übertragenden elektrischen Signale elektrisch/optisch umgesetzt und im Wellenlängenmultiplex übertragen, wobei unter Verwendung mindestens eine Wellenlängen mindestens ein nicht umschaltbarer optischer Hilfskanal eingerichtet ist, der insbesondere zur Übertragung von Synchronisationssignalen reserviert ist. Das Verfahren kann angewendet werden in einem synchronen Nachrichtenübertragungssystem mit mindestens drei über optische Leitungen verbundene Netzelemente. Dedizierte Synchronisationsverbindungen über den mindestens einen Hilfskanal sind dann zwischen den mindestens drei Netzelementen zur ausschließlichen Übertragung mindestens eines Synchronisationstaktes geschaltet.

Im folgenden wird die Erfindung anhand eines Ausführungsbeispiels unter Zuhilfenahme zweier Figuren erläutert. Es zeigen:
- Fig.1: eine schematische Darstellung eines erfindungsgemäßen synchronen digitalen Nachrichtenübertragungssystems und
- Fig.2: eine schematische Darstellung eines Ausschnitts des Netzelementes NE1 aus Fig. 1.

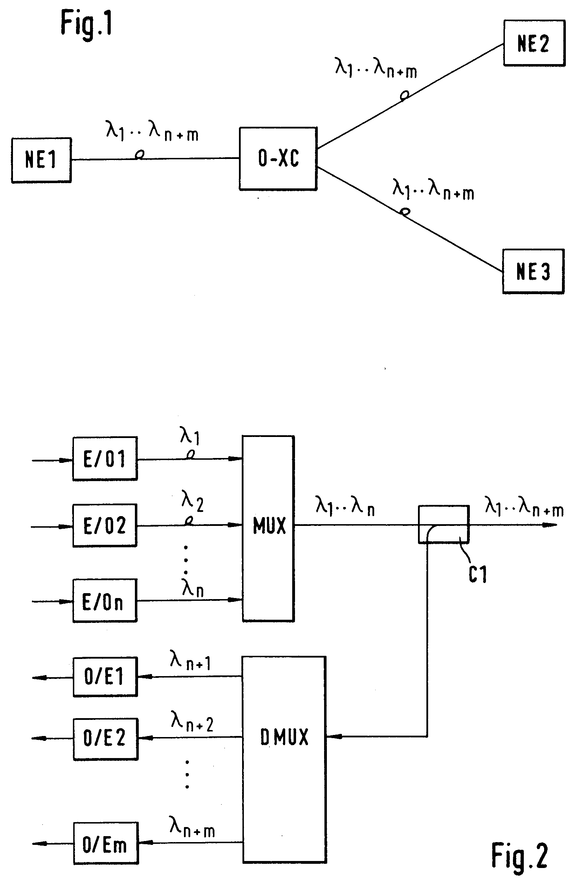

Das Ausführungsbeispiel wird nun zunächst unter Zuhilfenahme von Fig. 1 erläutert. Fig. 1 zeigt ein synchrones digitales Nachrichtenübertragungssystem. Das Nachrichtenübertragungssystem beinhaltet drei Netzelemente NE1, NE2, NE3, die über optische Leitungen miteinander verbunden sind. Zwischen die Netzelemente NE1, NE2, NE3 ist ein optischer Cross-Connect O-XC geschaltet. Über die optischen Leitungen, die z.B. aus optischen Glasfaserleitungen aufgebaut sind werden optische Signale im Wellenlängenmultiplex (WDM) oder DWDM übertragen. Es sind n+m Wellenlängen vorgesehen. Das Nachrichtenübertragungssystem ist als bidirektionales Übertragungssystem ausgeführt. Die Wellenlängen λ₁ bis λₙ sind für die Übertragung von Signalen von Netzelement NE1 zu den Netzelementen NE2, NE3 vorgesehen. Die Wellenlängen λₙ₊₁ bis λₙ₊ₘ sind für die Übertragung von Signalen von den Netzelementen NE2, NE3 zu Netzelement NE1 vorgesehen; n und m sind natürliche Zahlen, beispielsweise n=20, m=20.

Das Nachrichtensystem stellt die Minimalversion eines Nachrichtensystems dar, das WDM über geschaltete optische Verbindungen ermöglicht. Die Erfindung ist auch auf einfache Art und Weise auf Übertragungssysteme mit mehr als drei Netzelementen, z.B. eintausend, anwendbar, die z.B. über ein Maschennetz aus optischen Cross-Connectoren und Add/Drop-Multiplexern miteinander verbunden sind. Generell ist die Erfindung auf jedes synchrone Übertragungssystem anwendbar, das mindestens drei elektrische Teilnetze über ein optisches Teilnetz derart miteinander verbindet, dass umschaltbare optische Verbindungen möglich sind.

Das Ausführungsbeispiel wird nun weiter unter Zuhilfenahme von Fig. 2 erläutert. Fig. 2 zeigt einen Ausschnitt aus Netzelement NE1 aus Fig. 1. Netzelement NE1 beinhaltet n Elektrisch/Optisch-Umsetzer E/O1, E/O2, ..., E/On und m Optisch/Elektrisch-Umsetzer O/E1, O/E2, ..., O/Em. Die n Elektrisch/Optisch-Umsetzer E/O1, E/O2, ..., E/On dienen dazu, die über die Schnittstelleneinrichtungen des Netzelementes NE1 ausgesendeten und über das optische Netz zu übertragenden elektrischen Signale elektrisch/optisch umzusetzen. Die erste Schnittstelleneinrichtung ist dazu mit dem Elektrisch/Optisch-Umsetzer E/O1 verbunden und ihm fest zugeordnet, die zweite Schnittstelleneinrichtung mit dem Elektrisch/Optisch-Umsetzer E/O2, usw. Jeder Elektrisch/Optisch-Umsetzer E/O1, E/O2, ..., E/On generiert eine andere Wellenlänge. Alle Wellenlängen λ₁ bis λₙ werden in einem z.B. als optischen Combiner ausgeführten Multiplexer MUX zusammengefaßt. Die überlagerten Wellenlängen werden gemeinsam über das optische Netz übertragen. Der optische Cross-Connect schaltet optische Verbindungen und leitet die den optischen Verbindungen zugeordneten Wellenlängen entsprechend ihrer Zieladresse weiter. Sollen z.B. Nachrichten über zwei optische Kanäle zum Netzelement NE2 weitergeleitet werden, so werden dazu z.B. die Wellenlängen λ₂ bis λ₃ benutzt, die dann zum Netzelement NE2 weitergeleitet werden, indem der optische Cross-Connect O-XC diese Wellenlängen entsprechend durchschaltet. Sollen z.B. Nachrichten über zwei weitere optische Kanäle zum Netzelement NE3 weitergeleitet werden, so werden z.B. die Wellenlängen λ₄ bis λ₅ dazu benutzt und der optische Cross-Connect O-XC schaltet diese Wellenlängen entsprechend durch. In einer weiteren Zeitspanne können z.B. Nachrichten über die Wellenlängen λ₂ und λ₅ zum Netzelement NE3 weitergeleitet werden sowie über die Wellenlängen λ₃ bis λ₄ zum Netzelement NE3. Um die Synchronisation im Netz stetig zu gewährleisten ist ein nicht umschaltbarer optischer Hilfskanal eingerichtet, z.B. durch Reservierung der Wellenlänge λ₁ zur ausschließlichen Übertragung von Hilfssignalen, wie Synchronisationssignalen. Dem Elektrisch/Optisch-Umsetzer E/O1 wird ein in einer Primär-Referenzquelle generierter Synchronisationstakt zugeführt. Der Synchronisationstakt wird über die reservierte Wellenlänge λ₁ Netzelement NE2 zugeführt. Netzelemente NE2 synchronisiert sich auf den empfangenen Takt. Durch Einrichtung eines zweiten Hilfskanals durch Reservierung einer zweiten Wellenlänge kann der Synchronisationstakt Netzelement NE3 zugeführt werden, das sich dann auch auf den empfangenen Takt synchronisiert.

Netzelement NE1 empfängt Nachrichten von Netzelementen NE2 und NE3 über eine optische Auskoppelvorrichtung C 1 und einen Demultiplexer DMUX, der einzelne Wellenlängen selektiert und an die Optisch/Elektrisch-Umsetzer O/E1, O/E2, ..., O/Em weiterleitet. Die Auskoppelvorrichtung C1 koppelt alle Wellenlängen λₙ₊₁ bis λₙ₊ₘ aus der optischen Glasfaser aus; n und m können auch unterschiedliche Werte aufweisen. Der Demultiplexer DMUX ist beispielsweise als wellenlängenabhängiger Splitter ausgeführt. Jeder Optisch/Elektrisch-Umsetzer O/E1, O/E2, ..., O/Em setzt eine andere Wellenlänge um und leitet das entsprechende elektrische Signal an eine Schnittstelleneinrichtung des Netzelementes NE1 weiter. Beim Master/Slave-Verfahren (hierarchische Synchronisation) können alle Wellenlängen λₙ₊₁ bis λₙ₊ₘ zur Übertragung von Nachrichtensignalen genutzt werden. Bei der gegenseitigen Synchronisation sind beispielsweise die Wellenlängen λₙ₊₁ und λₙ₊₂ für die Synchronisationssignale von Netzelement NE2 bzw. NE3 reserviert; die übrigen Wellenlängen λₙ₊₃ bis λₙ₊ₘ können dann für die Übertragung von Nachrichten genutzt werden.

Bei der gegenseitigen Synchronisation sind beispielsweise zwei, drei oder vier Schnittstelleneinrichtungen des Netzelementes NE1 für Synchronisationszwecke reserviert und Elektrisch/Optisch-Umsetzer bzw. Optisch/Elektrisch-Umsetzern fest zugeordnet. Eine Auswahl des zu verwendeten Synchronisationstaktes erfolgt z.B. nach Priorität oder nach qualitativ höherwertigem Empfang.

Im optischen Netzelement NE2 werden die Wellenlängen λ₁ bis λₙ empfangen. Diese Wellenlängen können über optische Splitter zu mehreren optischen Netzelementen weitergeleitet werden, so dass die über die Wellenlängen übertragenen Nachrichten im Broadcast-Verfahren verteilt werden. Insbesondere der Hilfskanal kann auf diese Art und Weise an eine Vielzahl von Netzelementen gleichzeitig weitergeleitet werden. Werden Synchronisationssignale im Hilfskanal übertragen, erreichen diese eine Vielzahl von Netzelementen, die sich auf diese Synchronisationssignale synchronisieren. Alternativ kann über eine geeignete Anordnung von Splittern der Hilfskanal nur an ausgewählte Ports des optischen Netzelementes NE2 weitergeleitet werden, damit die Synchronisationssignale z.B. nur entsprechend der vorab festgelegten Synchronisationspfade weitergeleitet werden; z.B. zur Vermeidung von Synchronisationsschleifen. In einer weiteren Variante werden die über den Hilfskanal im Netzelement NE2 empfangenen Synchronisationssignale optisch/elektrisch umgesetzt. Eine elektrische Auswertung erfolgt z.B. unter Verwendung einer PLL. Die anschließende Verteilung der gegebenenfalls aus mehreren empfangenen Synchronisationssignalen ausgewerteten und ausgewählten Synchronisationssignale über ausgewählte oder alle Ports des Netzelementes NE2 erfolgt für jede optische Verbindung durch elektrisch/optische Umsetzung und über einen optischen Kombiner, der beispielsweise die für den Hilfskanal vorgesehene Wellenlänge λ₁ den Wellenlängen λ₂ bis λₙ hinzufügt. Bezüglich der Nachrichten erfolgt die Verarbeitung und Weiterleitung im Netzelement NE2 z.B. rein optisch, bezüglich der Synchronisationssignale elektrisch.

## Patentansprüche

1. Synchrones digitales Nachrichtenübertragungssystem zur optischen Übertragung von elektrischen Signalen, bei dem die zu übertragenden elektrischen Signale elektrisch/optisch (E/O1, E/O2, E/On) umgesetzt und im Wellenlängenmultiplex übertragen werden,
**dadurch gekennzeichnet,**
dass unter Verwendung mindestens einer Wellenlänge (λ₁) mindestens ein nicht umschaltbarer, optischer Hilfskanal eingerichtet ist, der insbesondere für die Übertragung von Synchronisationssignalen reserviert ist.

2. Übertragungssystem nach Anspruch 1, dadurch gekennzeichnet, dass der mindestens eine Hilfskanal zur Übertragung von Management- und Maintenance-Signalen dient.

3. Übertragungssystem nach Anspruch 1, dadurch gekennzeichnet, dass mindestens drei jeweils mindestens einen Elektrisch/Optisch-Umsetzer (E/01, E/02, E/On) und mindestens einen Optisch/Elektrisch-Umsetzer (O/E1, O/E2, O/Em) beinhaltende Netzelemente (NE1, NE2, NE3) über optische Leitungen miteinander verbunden sind, dass mindestens ein optischer Cross-Connect (O-XC) zwischen die Netzelemente (NE1, NE2, NE3) geschaltet ist, und dass der mindestens eine optische Cross-Connect (O-XC) geeignet ist, unter Verwendung einzelner Wellenlängen (λ₂, λₙ) optische Verbindungen zu schalten zur Weiterleitung von Signalen eines Netzelements (NE1, NE2, NE3) zu einem anderen Netzelement (NE1, NE2, NE3), wobei der mindestens eine optische Hilfskanal nicht für die geschalteten optischen Verbindungen verwendbar ist.

4. Übertragungssystem nach Anspruch 1, dadurch gekennzeichnet, dass mindestens drei über optische Leitungen verbundene Netzelemente (NE1, NE2, NE3) vorgesehen sind, dass die Netzelemente (NE1, NE2, NE3) SDH- oder SONET-Elemente sind, und dass zwischen den Netzelementen (NE1, NE2, NE3) eine hierarchische Synchronisation durch die Einrichtung des mindestens einen Hilfskanals zur Übertragung eines in einer Primär-Referenzquelle generierten Synchronisationstaktes und daraus abgeleitete Takte über vorgegebene Pfade eingerichtet ist.

5. Übertragungssystem nach Anspruch 1, dadurch gekennzeichnet, dass mindestens drei über optische Leitungen verbundene Netzelemente (NE1, NE2, NE3) vorgesehen sind, dass die Netzelemente (NE1, NE2, NE3) SDH- oder SONET-Elemente sind, und dass zwischen den Netzelementen (NE1, NE2, NE3) ein Verfahren der gegenseitigen Synchronisation durch die Einrichtung des mindestens einen Hilfskanals zur Übertragung mindestens eines in mindestens einer Primär-Referenzquelle generierten Synchronisationstaktes über vorgegebene Pfade eingerichtet ist.

6. Übertragungssystem nach Anspruch 1, dadurch gekennzeichnet, dass mindestens drei über optische Leitungen verbundene Netzelemente (NE1, NE2, NE3) vorgesehen sind, dass ein Synchronisations-Manager und ein Connection-Manager vorgesehen sind, dass der Synchronisations-Manager geeignet ist, über den mindestens einen Hilfskanal dedizierte Synchronisationsverbindungen zwischen den mindestens drei Netzelementen (NE1, NE2, NE3) zu konfigurieren, und dass der Connection-Manager geeignet ist, über umschaltbare optische Verbindungen, in denen der mindestens eine Hilfskanal nicht enthalten ist, Nachrichtenverbindungen zu konfigurieren.

7. Verfahren zum optischen Übertragen von elektrischen Signalen, bei dem die zu übertragenden elektrischen Signale elektrisch/optisch (E/O1, E/02, E/On) umgesetzt werden und im Wellenlängenmultiplex übertragen
werden,
**dadurch gekennzeichnet,**
dass unter Verwendung mindestens eine Wellenlänge (λ₁) mindestens ein nicht umschaltbarer, optischer Hilfskanal eingerichtet ist, der insbesondere für die Übertragung von Synchronisationssignalen reserviert ist.

8. Verfahren nach Anspruch 7, dadurch gekennzeichnet, dass in einem synchronen Nachrichtenübertragungssystem mit mindestens drei über optische Leitungen verbundene Netzelemente (NE1, NE2, NE3) über den mindestens einen Hilfskanal dedizierte Synchronisationsverbindungen zwischen den mindestens drei Netzelementen (NE1, NE2, NE3) zur Übertragung mindestens eines Synchronisationstaktes geschaltet sind.
